(19)

Europäisches
Patentamt

European
Patent Office

Office européen
des brevets

(11) EP 4 333 521 A1

(12) EUROPEAN PATENT APPLICATION
published in accordance with Art. 153(4) EPC

(43) Date of publication:
06.03.2024 Bulletin 2024/10

(21) Application number: 22796069.7

(22) Date of filing: 25.04.2022

(51) International Patent Classification (IPC):
H04W 72/02 (2009.01)    H04W 72/04 (2023.01)
H04W 28/04 (2009.01)    H04W 72/12 (2023.01)
H04W 76/28 (2018.01)    H04W 4/40 (2018.01)
H04W 92/18 (2009.01)

(52) Cooperative Patent Classification (CPC):
H04W 4/40; H04W 28/04; H04W 72/02;
H04W 72/04; H04W 72/12; H04W 76/28;
H04W 92/18

(86) International application number:
PCT/KR2022/005863

(87) International publication number:
WO 2022/231236 (03.11.2022 Gazette 2022/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.04.2021  KR 20210053848
30.04.2021  KR 20210056407
30.04.2021  KR 20210056415

(71) Applicant: LG Electronics Inc.
Yeongdeungpo-gu
Seoul 07336 (KR)

(72) Inventors:
• PARK, Giwon
  Seoul 06772 (KR)
• LEE, Seungmin
  Seoul 06772 (KR)
• BACK, Seoyoung
  Seoul 06772 (KR)
• SEO, Hanbyul
  Seoul 06772 (KR)
• HONG, Jongwoo
  Seoul 06772 (KR)

(74) Representative: Maikowski & Ninnemann
Patentanwälte Partnerschaft mbB
Postfach 15 09 20
10671 Berlin (DE)

(54) **METHOD AND DEVICE FOR PERFORMING SL DRX RETRANSMISSION TIMER-BASED TRANSMISSION RESOURCE RESELECTION OPERATION IN NR V2X**

(57)    A method for operating a first device 100 in a wireless communication system is proposed. The method comprises the steps of: receiving first SCI for scheduling a PSSCH from a second device (200) through a first PSCCH on the basis of an active time and a first resource of an SL DRX configuration, wherein the first SCI includes information related to a plurality of resources including the first resource and a second resource; monitoring second SCI for scheduling a PSSCH, transmitted through a second PSCCH, on the basis of the second resource; and starting a timer associated with the active time on the basis of the second SCI not being received from the second resource.

FIG. 13

EP 4 333 521 A1

**Description**

**TECHNICAL FIELD**

This disclosure relates to a wireless communication system.

**BACKGROUND**

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Even in NR, vehicle-to-everything (V2X) communication may be supported.

**DISCLOSURE**

**TECHNICAL SOLUTION**

According to an embodiment of the present disclosure, a method for performing, by a first device, wireless communication may be proposed. For example, the method may comprise: obtaining sidelink, SL, discontinuous reception, DRX, including information for a timer related to an active time; receiving, from a second device, first sidelink control information, SCI, for scheduling of a physical sidelink shared channel, PSSCH, through a first physical sidelink control channel, PSCCH, based on the active time of the SL DRX configuration and a first resource, wherein the first SCI may include information related to a plurality of resources including the first resource and a second resource; receiving, from the second device, a first medium access control, MAC, protocol data unit, PDU, through a first PSSCH, based on the active time and the first resource; monitoring second SCI for scheduling of a PSSCH, transmitting through a second PSCCH, based on the second resource; starting the timer related to the active time, based on the second SCI being not received on the second resource.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain sidelink, SL, discontinuous reception, DRX, including information for a timer related to an active time; receive, from a second device, first sidelink control information, SCI, for scheduling of a physical sidelink shared channel, PSSCH, through a first physical sidelink control channel, PSCCH, based on the active time of the SL DRX configuration and a first resource, wherein the first SCI may include information related to a plurality of resources including the first resource and a second resource; receive, from the second device, a first medium access control, MAC, protocol data unit, PDU, through a first PSSCH, based on the active time and the first resource; monitor second SCI for scheduling of a PSSCH, transmitting through a second PSCCH, based on the second resource; and start the timer related to the active time, based on the second SCI being not received on the second resource.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: obtain sidelink, SL, discontinuous reception, DRX, including information for a timer related to an active time; receive, from a second UE, first sidelink control information, SCI, for scheduling of a physical sidelink shared channel, PSSCH, through a first physical sidelink control channel, PSCCH, based on the active time of the SL DRX configuration and a first resource, wherein the first SCI may include information related to a plurality of resources including the first resource and a second resource; receive, from the second UE, a first medium access control, MAC, protocol data unit, PDU, through a first PSSCH, based on the active time and the first resource; monitor second SCI for scheduling of a PSSCH, transmitting through a second PSCCH, based on the second resource; and start the timer related to the active time, based on the second SCI being not received on the second resource.

According to an embodiment of the present disclosure, a non-transitory computer-readable storage medium storing instructions may be proposed. For example, when executed, the instructions may cause a first device to: obtain sidelink, SL, discontinuous reception, DRX, including information for a timer related to an active time; receive, from a second device, first sidelink control information, SCI, for scheduling of a physical sidelink shared channel, PSSCH, through a first physical sidelink control channel, PSCCH, based on the active time of the SL DRX configuration and a first resource, wherein the first SCI may include information related to a plurality of resources including the first resource and a second resource; receive, from the second device, a first medium access control, MAC, protocol data unit, PDU, through a first PSSCH, based on the active time and the first resource; monitor second SCI for scheduling of a PSSCH, transmitting through a second PSCCH, based on the second resource; and start the timer related to the active time, based on the second SCI being not received on the second resource.

According to an embodiment of the present disclosure, a method for performing, by a second device, wireless communication may be proposed. For example, the method may comprise: transmitting, to a first device, first sidelink control information, SCI, for scheduling of a physical sidelink shared channel, PSSCH, through a first physical sidelink control channel, PSCCH, based on the active time of the SL DRX configuration and a first resource, wherein the first SCI may include information related to a plurality of resources including the first resource and a second resource; and transmitting, to the first device, a first medium access control, MAC, protocol data unit, PDU, through a first PSSCH, based on the active time and the first resource, wherein the timer related to the active time may be started based on the second SCI being not transmitted on the second resource.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: transmit, to a first device, first sidelink control information, SCI, for scheduling of a physical sidelink shared channel, PSSCH, through a first physical sidelink control channel, PSCCH, based on the active time of the SL DRX configuration and a first resource, wherein the first SCI may include information related to a plurality of resources including the first resource and a second resource; and transmit, to the first device, a first medium access control, MAC, protocol data unit, PDU, through a first PSSCH, based on the active time and the first resource, wherein the timer related to the active time may be started based on the second SCI being not transmitted on the second resource.

## ADVANTAGEOUS EFFECTS

The user equipment (UE) may efficiently perform SL communication.

## BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows an embodiment related to the prior art that is the subject matter of the present disclosure.
FIG. 9 shows resource reselection operation of a transmitting UE during SL DRX retransmission timer operation, according to one embodiment of the present disclosure.
FIG. 10 shows an example of an SL DRX timer operation method performed based on receiving SCI, according to one embodiment of the present disclosure. The embodiment of FIG. 10 may be combined with various embodiments of the present disclosure.
FIG. 11 shows an embodiment in which an SL DRX timer operation is performed based on SCI received on a reselected resource due to pre-emption or the like, according to one embodiment of the present disclosure.
FIG. 12 shows an embodiment of performing resource reselection based on the length of an SL DRX retransmission timer, according to one embodiment of the present disclosure.

FIG. 13 shows a procedure for a first device to perform wireless communication, according to one embodiment of the present disclosure.

FIG. 14 shows a procedure for a second device to perform wireless communication, according to one embodiment of the present disclosure.

FIG. 15 shows a communication system 1, based on an embodiment of the present disclosure.

FIG. 16 shows wireless devices, based on an embodiment of the present disclosure.

FIG. 17 shows a signal process circuit for a transmission signal, based on an embodiment of the present disclosure.

FIG. 18 shows another example of a wireless device, based on an embodiment of the present disclosure.

FIG. 19 shows a hand-held device, based on an embodiment of the present disclosure.

FIG. 20 shows a vehicle or an autonomous vehicle, based on an embodiment of the present disclosure.

**MODE FOR INVENTION**

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on 5G NR. However, technical features according to an embodiment of the present disclosure will not be limited only to this.

For terms and technologies used herein that are not specifically described, reference may be made to wireless communication standards documents published prior to the filing of this specification.

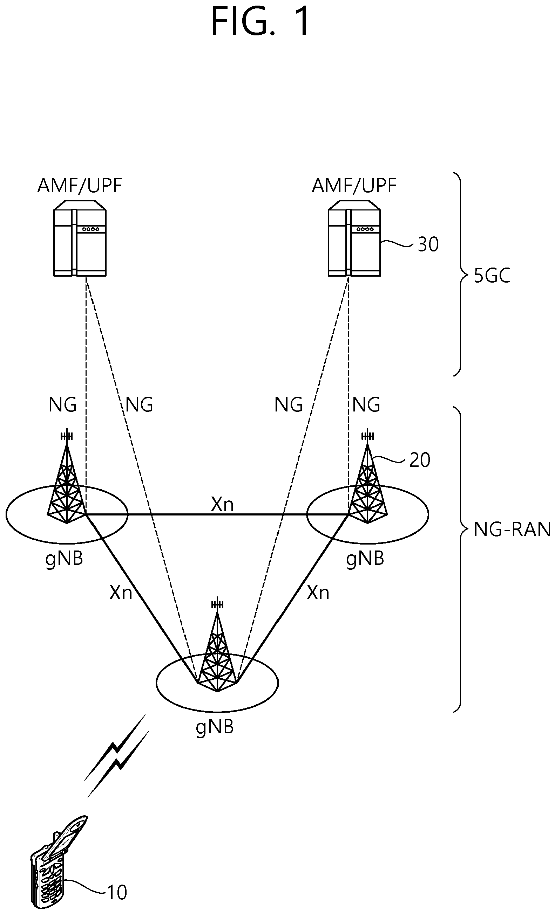

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L 1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

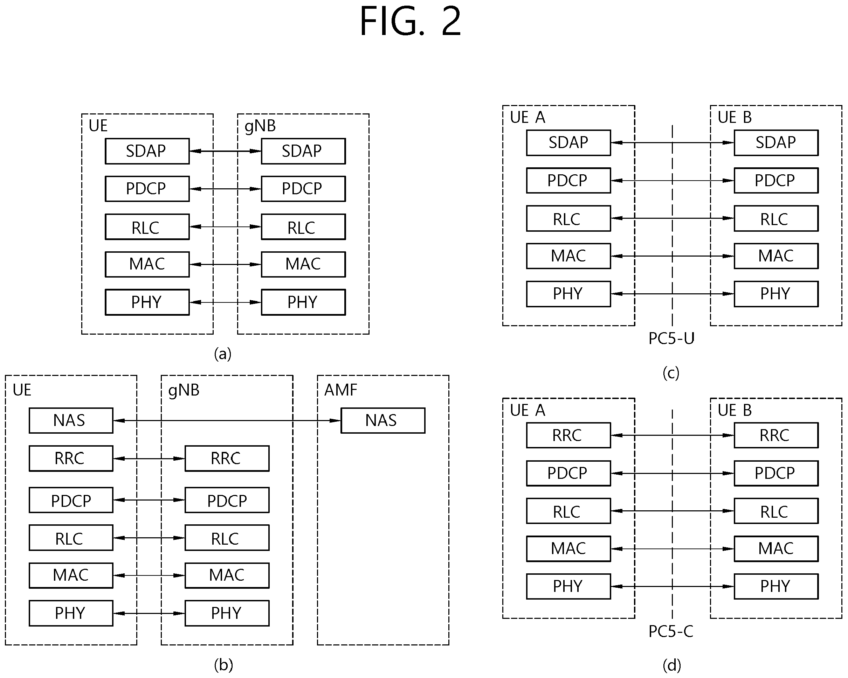

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

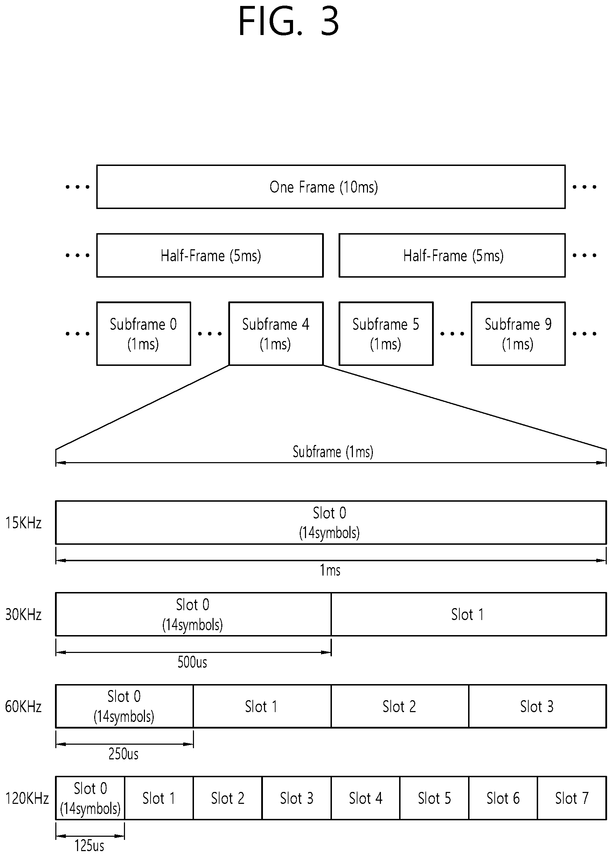

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
| --- | --- | --- |
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
| --- | --- | --- |
| FR1 | 410MHz - 7125MHz | 15, 30, 60kHz |
| FR2 | 24250MHz - 52600MHz | 60, 120, 240kHz |

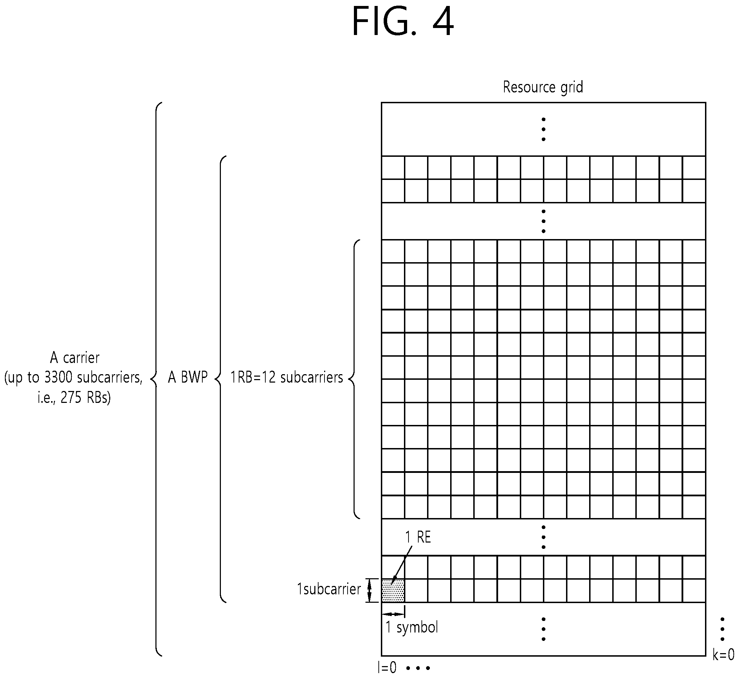

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

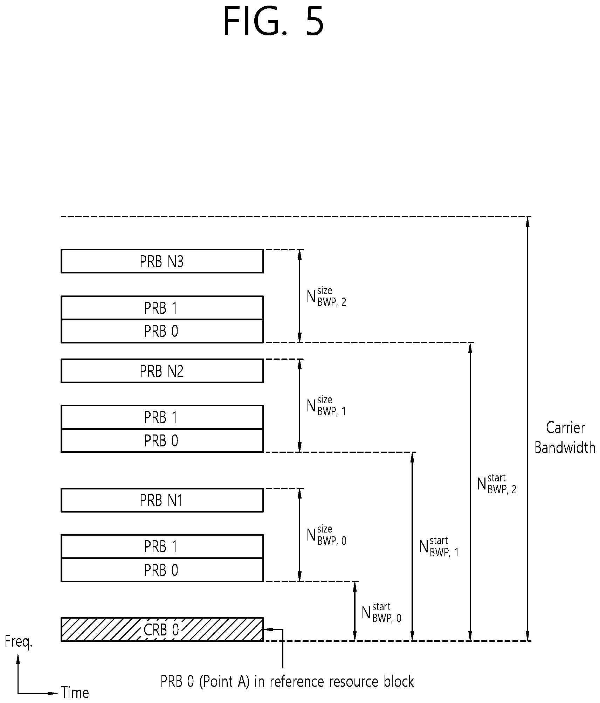

FIG. 5 shows an example of a BWP, based on an embodiment of the present disclosure. The embodiment of FIG. 5 may be combined with various embodiments of the present disclosure. It is assumed in the embodiment of FIG.

5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

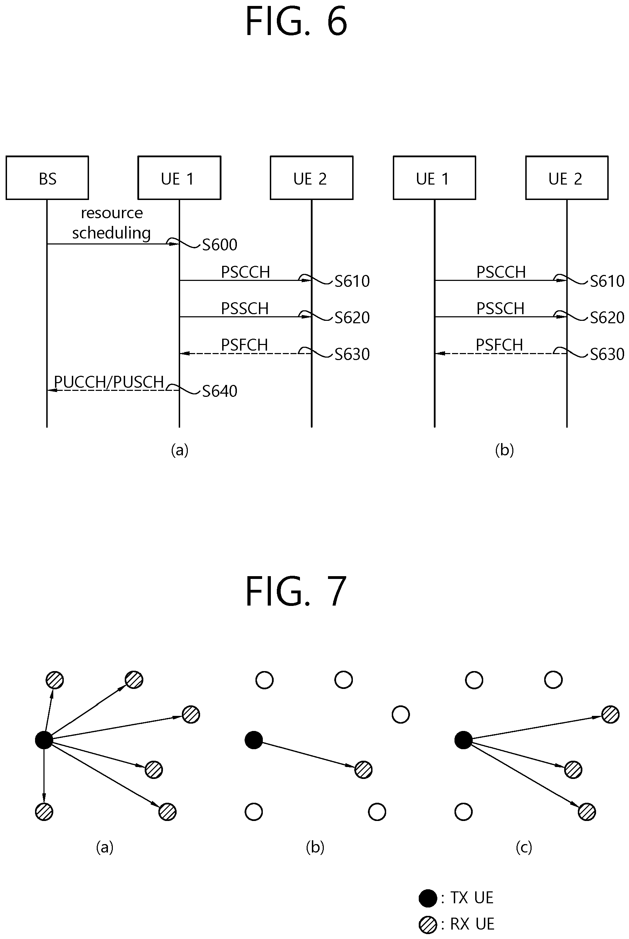

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
| --- | --- |
| 00 | SCI format 2-A |

(continued)

| Value of 2nd-stage SCI format field | 2nd-stage SCI format |
|---|---|
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for decoding PSSCH and is used with HARQ operation when the HARQ-ACK information contains only NACK or when there is no feedback from the HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

Hereinafter, a UE procedure for determining a subset of resources to be reported to an higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources ( $r'_0, r'_1, r'_2, \cdots$ ) which may be subject to pre-emption.
- it is up to UE implementation to determine the subset of resources as requested by higher layers before or after the slot $r''_i$ - $T_3$ , where $r''_i$ is the slot with the smallest slot index among $(r_0, r_1, r_2, ...)$ and ( $r'_0, r'_1, r'_2, \cdots$ ) , and $T_3$ is equal to $T^{SL}_{proc,1}$ , where $T^{SL}_{proc,1}$ is defined in slots, and where $\mu_{SL}$ is the SCS configuration of the SL BWP.

The following higher layer parameters affect this procedure:
sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$ .

Notation:

( $t'^{SL}_0, t'^{SL}_1, t'^{SL}_2, \cdots$ ) may denote the set of slots which belongs to the sidelink resource pool.

For example, a UE may select a set of candidate resources (Sa) based on Table 8. For example, when resource (re)selection is triggered, a UE may select a candidate resource set (Sa) based on Table 8. For example, when re-evaluation or pre-emption is triggered, a UE may select a candidate resource set (Sa) based on Table 8.

[Table 8]

| The following steps are used: |
| --- |

(continued)

1) A candidate single-slot resource for transmission $R_{x,y}$ is defined as a set of $L_{subCH}$ contiguous sub-channels with sub-channel $x+j$ in slot $t'^{SL}_y$ where $j = 0,..., L_{subCH} -$

1. The UE shall assume that any set of $L_{subCH}$ contiguous sub-channels included in the corresponding resource pool within the time interval $[n + T_1, n + T_2]$ correspond to one candidate single-slot resource, where

- selection of $T_{l1}$ is up to UE implementation under $0 \leq T_1 \leq T^{SL}_{proc,1}$, where $T^{SL}_{proc,1}$ is define d in slots in Table 8.1.4-2 where $\mu_{SL}$ is the SCS configuration of the SL BWP;

- if $T_{2min}$ is shorter than the remaining packet delay budget (in slots) then $T_2$ is up to UE implementation subject to $T_{2min} \leq T_2 \leq$ remaining packet delay budget (in slots); otherw ise $T_2$ is set to the remaining packet delay budget (in slots).

The total number of candidate single-slot resources is denoted by $M_{total}$.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the i-th field in *sl-Thres-RSRP-List*, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the *'Resource reservation period* field is present in the received SCI format 1-A, is assumed to be received in slot(s) $t'^{SL}_{m+q \times P'_{rsvp\_RX}}$ determines according to clause 8.1.5 the set of resource blocks and slots which overlaps with

$R_{x,y+j \times P'_{rsvp\_TX}}$ for q=1, 2, ..., Q and j=0, 1, ..., $C_{resel}$ - 1. Here, $P'_{rsvp\_RX}$ RX is $P_{rsvp\_RX}$ converted to units of logical slots according to clause 8.1.7,

$Q = \left\lceil \frac{T_{scal}}{P_{rsvp\_RX}} \right\rceil$ if $P_{rsvp\_RX} < T_{scal}$ and $n' - m \leq P'_{rsvp\_RX}$ , where $t'^{SL}_{n'} = n$ if slot *n* belongs to the set $(t'^{SL}_0, t'^{SL}_1, \ldots, t'^{SL}_{T'_{max}-1})$ , otherwise slot $t'^{SL}_{n'}$ , is the first slot after slot *n* belonging to the set $(t'^{SL}_0, t'^{SL}_1, \ldots, t'^{SL}_{T'_{max}-1})$ ; otherwise Q = 1. $T_{scal}$ is set to selection window size $T_2$ convert ed to units of msec.

7) If the number of candidate single-slot resources remaining in the set $S_A$ is smaller than $X \cdot M_{total}$, then *Th* ($p_i, p_j$) is increased by 3 dB for each priority value $Th(p_i, p_j)$ and the procedure continues with step 4.

The UE shall report set $S_A$ to higher layers.

If a resource $r_i$ from the set ($r_0, r_1, r_2, ...$) is not a member of $S_A$, then the UE shall report re-evaluation of the resource $r_i$ to higher layers.

If a resource $r'_i$ from the set ( $r'_0, r'_1, r'_2, ...$ ) meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

- *sl-PreemptionEnable* is provided and is equal to 'enabled' and $prio_{TX} > prio_{RX}$

- *sl-PreemptionEnable* is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing.

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

In this specification, the word "configure or define" may be interpreted as being (pre)configured by a base station or network (via predefined signaling (e.g., SIB signaling, MAC signaling, RRC signaling). For example, "A may be configured" may include "a base station or network (pre)configures/defines or informs a terminal of A". Alternatively, the word "configure or define" may be interpreted as being pre-configured or predefined by the system. For example, "A may be configured" may include "A is pre-configured/defined by the system".

On the other hand, NR V2X in Release 16 did not support power saving operation of UEs, and NR V2X in Release 17 will support power saving operation of UEs (e.g., power saving UEs).

For power saving operation of a UE (e.g., sidelink (SL) discontinuous reception (DRX) operation), an SL DRX configuration to be used by a power saving UE (P-UE) shall be defined, and an operation (and SL DRX timer operation) of a transmitting UE and a receiving UE in an on-duration (interval during which SL reception/transmission can be performed)/off-duration (interval when operating in sleep mode) shall be defined. For example, the SL DRX configuration may include SL DRX cycle, SL DRX on-duration, SL DRX off-duration, a timer to support SL DRX operation (e.g., SL DRX inactivity timer, SL DRX HARQ RTT timer, SL DRX retransmission timer), etc.

In an embodiment(s) of the present disclosure, a method is proposed for a receiving UE to receive a SCI (including reserved transmission resource information) transmitted by a transmitting UE and PSSCH (SL data) related to the SCI, and to perform SL power saving operation based on the reserved transmission resource information included in the SCI. In the following description, "when, if, in case of" may be replaced by "based on".

The prior art is described below.

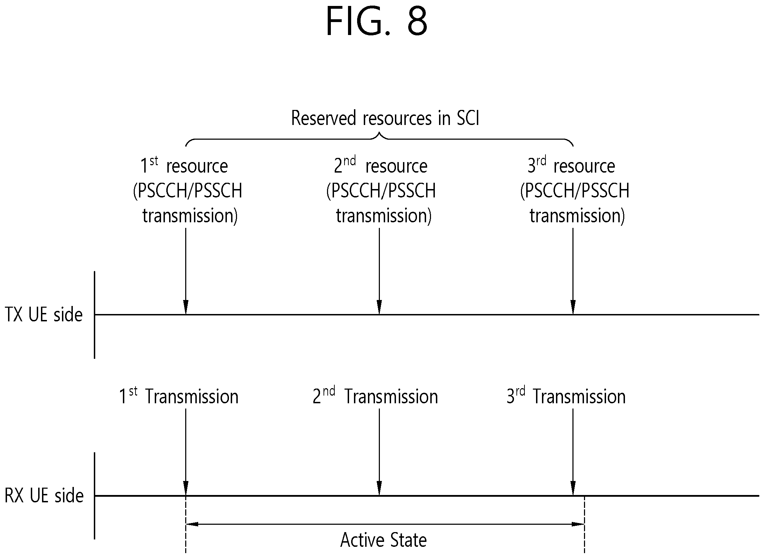

FIG. 8 shows an embodiment related to the prior art that is the subject matter of the present disclosure.

Referring to FIG. 8, when a receiving UE supporting SL DRX operation receives an SCI transmitted by a transmitting UE, the receiving UE may use reserved transmission resources to monitor (or, receive) PSCCH/PSSCH transmitted by the transmitting UE while remaining active state until all PSCCH/PSSCH transmitted by the transmitting UE are received. For example, wherein the SCI may be an SCI including reserved transmission schedule information for the reception of a PSSCH (e.g., SL data).

The present disclosure proposes a method for performing resource reselection by a transmitting UE when a receiving UE receives an SCI (including reserved transmission schedule information) transmitted by the transmitting UE and performs an SL DRX operation.

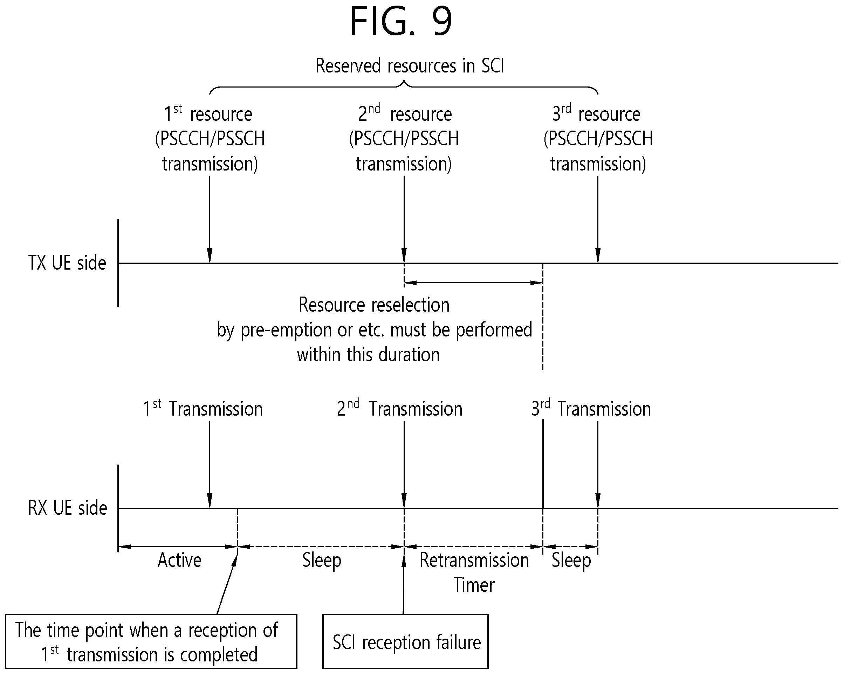

FIG. 9 shows resource reselection operation of a transmitting UE during SL DRX retransmission timer operation, according to one embodiment of the present disclosure. The embodiment of FIG. 9 may be combined with various embodiments of the present disclosure.

Referring to FIG. 9, a receiving UE may check SCI information transmitted by a transmitting UE (e.g., reserved transmission schedule information) and perform a power saving operation by transitioning to SL sleep mode until the scheduled transmission time is reached. For example, as shown in FIG. 9, a transmitting UE may select/schedule resources for up to three transmissions and inform a receiving UE about the resources for the transmissions by indicating via SCI. For example, the receiving UE may check the transmission schedule information included in the SCI transmitted by the transmitting UE (i.e., the resource schedule information selected/reserved by the transmitting UE) and infer when the transmitting UE will perform the three transmissions (1st PSSCH, 2nd PSSCH, and 3rd PSSCH). Therefore, as shown in FIG. 9, the receiving UE may perform a power saving operation by transitioning to the SL sleep mode from the time of completing reception for the 1st transmission to the time of reception for the 2nd transmission.

If, for example, a receiving UE does not receive SCI at the time of reception for the 2nd transmission, the receiving UE may start an SL DRX retransmission timer and monitor a PSCCH/PSSCH transmitted by the transmitting UE. For example, the receiving UE may not perform any monitoring operation for the PSCCH/PSSCH transmitted by the transmitting UE after the started (configured) SL DRX retransmission timer expires, or may transition to sleep mode.

If, for example, after the expiration of the SL DRX retransmission timer operated by the receiving UE, the transmitting UE reselects a transmission resource other than the one reserved in the previous SCI due to pre-emption/re-evaluation, UL-SL prioritization, NR-SL/LTE-SL prioritization, or congestion control, and transmits the PSCCH/PSSCH to the receiving UE based on the reselected resource, since the receiving UE is not performing any monitoring operation, a PSCCH/PSSCH reception failure problem of the receiving UE may occur. Therefore, to solve this problem, it is proposed in this disclosure that when a transmitting UE reselects a transmission resource other than the transmission resource reserved in the previous SCI due to pre-emption/re-evaluation, UL-SL prioritization, NR-SL/LTE-SL prioritization, or congestion control, etc., the transmitting UE is limited to perform the transmission resource reselection operation within a time range during which an SL DRX retransmission timer operates. That is, for example, the resource reselection operation may not be performed after the expiration of the SL DRX retransmission timer, i.e., the resource selected as a result of the reselection operation may be a resource prior to the expiration of the SL DRX retransmission timer.

Embodiments of the present disclosure may be solutions that are equally applicable to SL active time periods and SL inactive time periods of a UE. For example, the active time period may be an interval during which a UE is monitoring an SL channel or signal. For example, the SL inactive time may be an interval during which a UE is not required to monitor an SL channel or signal, or may operate in a power saving mode. Alternatively, for example, embodiments of the present disclosure may be solutions which may also be applicable if a UE receives SCI from a neighboring UE at the end of the SL active time period, and the next transmission resource scheduled via the SCI received in the active time period is a resource in the SL inactive time period.

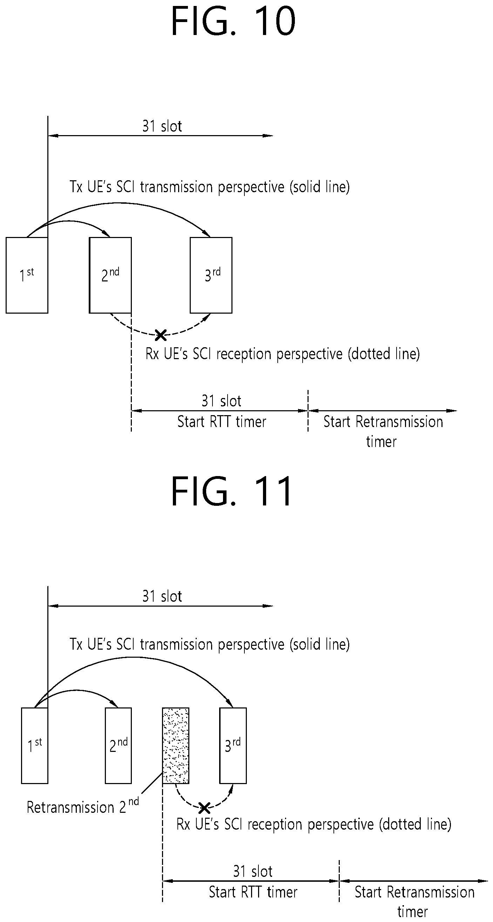

FIG. 10 shows an example of an SL DRX timer operation method performed based on receiving SCI, according to one embodiment of the present disclosure. The embodiment of FIG. 10 may be combined with various embodiments of the present disclosure.

Referring to FIG. 10, when SCI on a 1st resource related to a 1st transmission, transmitted by a transmitting UE, indicates resources for 2nd/3rd transmissions, if, from the perspective of a receiving UE, a successfully decoded SCI on the indicated 2nd resource does not indicate the 3rd resource indicated via the SCI on a 1st resource located within a range of 31 slots, the receiving UE may operate an SL DRX HARQ RTT timer from that point in time (at the time of the 3rd resource) up to 31 slots, and may operate an SL DRX retransmission timer after the expiration of the SL DRX HARQ RTT timer. In other words, for example, a receiving UE may not attempt to decode SCI on the 3rd resource indicated by the SCI on the 1st resource, nor may it operate an SL DRX retransmission timer from the time of the 3rd resource (or later). In such cases, the 3rd resource indicated by the SCI on the 1st resource may be considered to have been reselected as a resource in a region where it cannot be indicated by the SCI on the 2nd resource, due to pre-emption/re-evaluation.

Alternatively, for example, a receiving UE may maintain awake state by not starting an SL DRX HARQ RTT timer at the corresponding time point (3rd resource time point), but immediately starting an SL DRX retransmission timer.

Alternatively, for example, a receiving UE may start an SL DRX HARQ RTT timer at the corresponding time point (3rd resource time point), but set the value of the SL DRX HARQ RTT timer to zero. And, since the SL DRX HARQ RTT timer expires simultaneously with the start, the receiving UE may maintain the awake state by starting the SL DRX retransmission timer.

FIG. 11 shows an embodiment in which an SL DRX timer operation is performed based on SCI received on a reselected resource due to pre-emption or the like, according to one embodiment of the present disclosure. The embodiment of FIG. 11 may be combined with various embodiments of the present disclosure.

For example, if SCI on the 1st resource related to the 1st transmission, transmitted by a transmitting UE, indicates a resource for 2nd/3rd transmissions, if, from the perspective of a receiving UE, a successfully decoded SCI on the 2nd resource, reselected prior to the indicated 3rd resource time point, does not indicate the 3rd resource indicated by the SCI on the 1st resource, which in located within 31 slots range, the receiving UE may operate an SL DRX HARQ RTT timer until 31 slots from the corresponding time point (3rd resource time), and may operate an SL DRX retransmission timer after the expiration of the SL DRX HARQ RTT timer. In other words, for example, the receiving UE may not attempt to decode the SCI on the 3rd resource indicated by the SCI on the 1st resource, or may not operate an SL DRX retransmission timer from (after) the 3rd resource timer point. That is, these cases above may be interpreted that the 3rd resource indicated by the SCI on the 1st resource is reselected to a resource within a region which cannot be indicated by SCI on a 2nd resource by pre-emption/re-evaluation.

Alternatively, for example, a receiving UE may maintain awake state by immediately starting an SL DRX retransmission, rather than starting an SL DRX HARQ RTT timer at the corresponding time point (3rd resource time point).

Alternatively, for example, a receiving UE may start an SL DRX HARQ RTT timer at the corresponding time point (3rd resource time point), but set the value of the SL DRX HARQ RTT timer to zero. And, since the SL DRX HARQ RTT timer expires simultaneously with the start, the receiving UE may maintain awake state by starting an SL DRX retransmission timer.

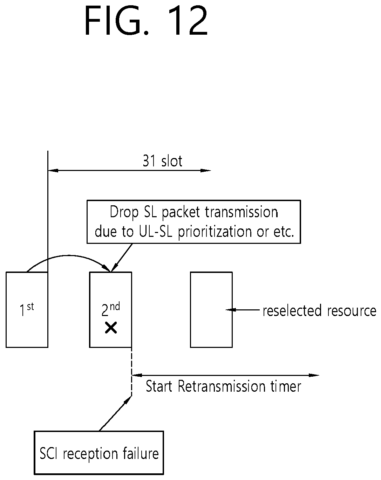

FIG. 12 shows an embodiment of performing resource reselection based on the length of an SL DRX retransmission timer, according to one embodiment of the present disclosure. The embodiment of FIG. 12 may be combined with various embodiments of the present disclosure.

For example, as one of the reasons why a receiving UE fails to decode SCI on a resource indicated by the previous SCI, there may be a case where the transmitting UE drops the sidelink transmission due to UL-SL prioritization (or NR-LTE SL prioritization). In this case, referring to FIG. 12, if a receiving UE continues to monitor a retransmission of the transmitting UE by operating an SL DRX retransmission timer from the resource indicated via the previous SCI, when the transmitting UE performs resource selection, it may limit that the interval between neighboring resources selected by the resource selection of the transmitting UE is less than or equal to the SL DRX retransmission timer value. If the interval between neighboring resources is thus less than the SL DRX retransmission timer length, since the retransmission data will be received during the SL DRX retransmission timer operation of the receiving UE even if the retransmission is performed due to the drop of the sidelink transmission of the transmitting UE, the reception of the sidelink data transmitted by the transmitting UE may be guaranteed. For example, the sidelink data transmitted by the transmitting UE may refer to the sidelink data transmitted using the reselected resource to perform the retransmission due to the drop of the sidelink transmission, i.e., the sidelink transmission using the reselected resource of FIG. 12.

If, for example, an interval between neighboring resources is greater than the length of the SL DRX retransmission timer operated by the receiving UE, a problem may arise in which the receiving UE's reception of the sidelink data cannot be guaranteed because the transmitting UE may transmit the sidelink data after the expiration of the receiving UE's SL DRX retransmission timer. For example, the sidelink data transmitted by the transmitting UE may refer to the sidelink data transmitted using the reselected resource to perform the retransmission due to the drop of the sidelink transmission, i.e., the sidelink transmission using the reselected resource of FIG. 12.

The SL DRX configuration and SL DRX timer referenced in this disclosure may be used for the following purposes.

[Table 9]

| ● Sidelink DRX configurations |
| --- |
| ✓ *SL drx-onDurationTimer*: the duration at the beginning of a SL DRX Cycle; <br> J *SL drx-SlotOffset*: the delay before starting the sl *drx-onDurationTimer*; <br> ✓ *SL drx InactivityTimer*: the duration after the PSCCH occasion in which a PSCCH indicates a new SL transmission for the MAC entity; <br> ✓ *SL drx-StartOffset*: the subframe where the SL DRX cycle start; <br> ✓ *SL drx-Cycle*: the SL DRX cycle; <br> ✓ *SL drx-HARQ-RTT-Timer* (per HARQ process or per sidelink process): the minimum duration before an assignment for HARQ retransmission is expected by the MAC entity. <br> ✓ *SL drx-RetransmissionTimer* (per HARQ process or per sidelink process): the maximum duration until a retransmission is received |

SL DRX on-duration timer: Indicates the period of time during which a UE performing SL DRX operation should operate as the default active time to receive PSCCH/PSSCH from other UE.

SL DRX inactivity timer: may represent an interval that extends an SL DRX on-duration interval, which is an interval during which a UE performing SL DRX operation must operate as active by default to receive PSCCH/PSSCH from other UE. That is, an SL DRX on-duration timer may be extended by the SL DRX inactivity timer interval. Furthermore, when a UE receives a PSCCH (1st SCI and/or 2nd SCI) for a new TE or a new packet (new PSSCH transmission) from other UE, the UE may extend the SL DRX on-duration timer by starting an SL DRX inactivity timer.

SL DRX HARQ RTT timer: may indicate an interval during which a UE performing SL DRX operation may operate in sleep mode until it receives a retransmission packet (or PSSCH assignment) from other UE. That is, if a UE starts the SL DRX HARQ RTT timer, the UE may determine that other UE will not transmit a sidelink retransmission packet to it until the SL DRX HARQ RTT timer expires and may operate in sleep mode during that timer. Or, the UE may not perform monitoring of an SL channel/signal which a transmitting UE transmits, ultil a counterpart UE's SL DRX HARQ RTT timer expires.

SL DRX retransmission timer: may indicate an interval of time during which a UE performing SL DRX operation is active to receive retransmission packets (or PSSCH assignments) transmitted by other UE. For example, an SL DRX retransmission timer may start when an SL DRX HARQ RTT timer expires. During this timer period, a UE may monitor a reception of retransmission sidelink packets (or PSSCH allocations) transmitted by other UE.

In addition, in the following description, the names of the timers (Uu DRX HARQ RTT TimerSL, Uu DRX Retransmission TimerSL, SL DRX On-Duration Timer, SL DRX Inactive Timer, SL DRX HARQ RTT Timer, SL DRX Retransmission Timer, etc.) are exemplary, and timers that perform the same/similar functions based on what is described in each timer can be considered the same/similar timers regardless of their names.

The proposal in this disclosure is a solution that can be applied and extended to address the problem of loss due to interference in Uu bandwidth part (BWP) switching.

Furthermore, the proposal in this disclosure can be applied and extended to address the problem of loss due to interference caused by SL BWP switching, for example, when the UE supports SL multiple BWP.

The proposals in this disclosure may be extended to not only default/common SL DRX configuration or default/common SL DRX pattern or parameters (and timers) included in default/common SL DRX configuration, but also to UE pair specific SL DRX configuration or UE pair specific SL DRX pattern or parameters (and, timers) included in UE pair specific SL DRX configuration.

Furthermore, for example, the on-duration term referred to in the present disclosure may be extended to an active time period, and the off-duration term may be extended to a sleep time period. For example, an active time may refer to an interval during which a UE is operating in wake up state (where RF module is on) to receive/transmit a radio signal. For example, sleep time may refer to an interval during which a UE is operating in a sleep mode state (where RF module is off) for power saving. For example, a sleep period does not imply that the transmitting UE is obliged to operate in sleep mode, i.e., the UE may be allowed to operate in active time for a short period of time to perform sensing operations/transmission operations, if necessary, even during a sleep period.

Further, for example, whether to apply (some of) the proposed schemes/rules of this disclosure and/or the related parameters (e.g., thresholds) may be configured specifically (or, differently, or independently), according to resource pool, congestion, service priority (and/or type), QoS requirements (e.g., delay, reliability) or PQI, traffic type (e.g., (non)periodic generation), SL transmission resource allocation mode (mode 1, mode 2), Tx Profile (e.g., Tx profile indicating that it is a service supporting an SL DRX operation, Tx profile indicating that it is a service in which support for an SL DRX operation is not required), etc.

For example, whether to apply the proposed rules of the present disclosure (and/or related parameter configuration values) may be configured specifically (and/or, independently and/or, differently), for at least one of resource pool (e.g. resource pool with PSFCH configured, resource pool without PSFCH configured), service/packet type (and/or priority), QoS profile or QoS requirements (e.g. URLLC/EMBB traffic, reliability, delay), PQI, PFI, cast type (e.g., unicast, groupcast, broadcast), (resource pool) congestion level (e.g., CBR), SL HARQ feedback scheme (e.g., NACK Only feedback, ACK/NACK feedback), in the case of HARQ feedback enabled MAC PDU (and/or HARQ feedback disabled MAC PDU) transmission, whether a PUCCH-based SL HARQ feedback report operation is configured, the case where pre-emption (and/or re-evaluation) (-based resource reselection) is (not) performed, (L2 or L1) (source and/or destination) identifier, (L2 or L1) (a combination of a source layer ID and a destination ID) identifier, (L2 or L1) (a combination of a pair of a source layer ID and a destination layer ID, and a cast type) identifier, a direction of a pair of a source layer ID and a destination layer ID, a PC5 RRC connection/link, a case where an SL DRX is (not) performed (or supported), an SL mode type (resource allocation mode 1, resource allocation mode 2), performance of (a)periodic resource reservation, Tx profile (Tx profile indicating that it is a service supporting an SL DRX operation, Tx profile indicating that it is a service in which support for an SL DRX operation is not required).

For example, a specific time term referred in the proposals of the present disclosure may represent a time during which a UE operates as an active time for a predefined time for receiving an SL signal or SL data from a counterpart UE, or operates as an active time for a specific timer (SL DRX retransmission timer, SL DRX inactivity timer, or a timer that guarantees to operate as an active time in a DRX operation of a receiving UE) time.

Further, for example, whether the proposals and proposed rules in this disclosure apply (and/or the related parameter configuration values) may also apply to mmWave SL operation.

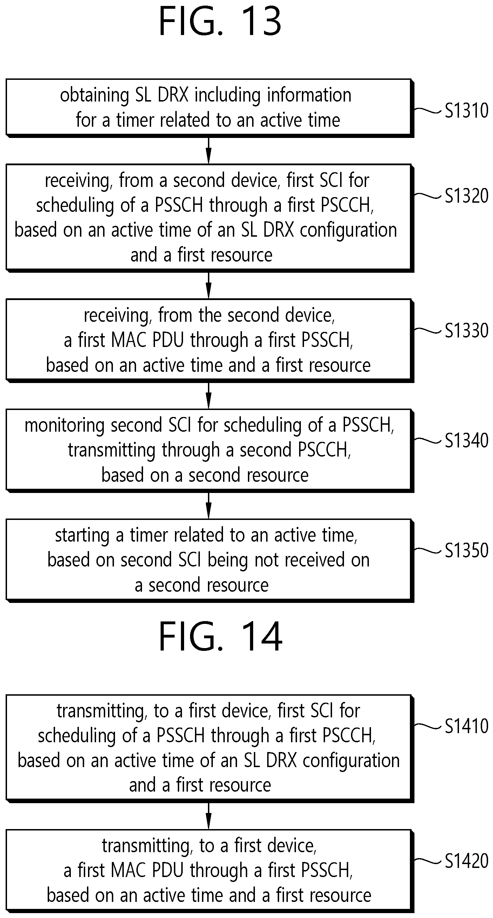

FIG. 13 shows a procedure for a first device to perform wireless communication, according to one embodiment of the present disclosure. The embodiment of FIG. 13 may be combined with various embodiments of the present disclosure.

Referring to FIG. 13, in step S1310, a first device may obtain sidelink, SL, discontinuous reception, DRX, including information for a timer related to an active time. In step S1320, the first device may receive, from a second device, first sidelink control information, SCI, for scheduling of a physical sidelink shared channel, PSSCH, through a first physical sidelink control channel, PSCCH, based on the active time of the SL DRX configuration and a first resource. For example, the first SCI may include information related to a plurality of resources including the first resource and a second resource. In step S1330, the first device may receive, from the second device, a first medium access control, MAC, protocol data unit, PDU, through a first PSSCH, based on the active time and the first resource. In step S1340, the first device may monitor second SCI for scheduling of a PSSCH, transmitting through a second PSCCH, based on the second resource. In step S1350, the first device may start the timer related to the active time, based on the second SCI being not received on the second resource.

For example, the second SCI may be related to a retransmission of the first MAC PDU.

For example, the second SCI may be related to a reception of a second MAC PDU which is different from the first MAC PDU.

For example, the timer related to the active time may be started based on expiration of an SL DRX hybrid automatic repeat request, HARQ, round trip time, RTT, timer with a timer value of zero.

For example, the timer related to the active time may be an SL DRX retransmission timer.

For example, a maximum number of the plurality of resources may be three.

For example, additionally, the first device may operate as an inactive time of the SL DRX configuration from after a time point of the first resource to a time point of the second resource.

For example, the inactive time of the SL DRX configuration may be started from a time point where the reception of the first MAC PDU based on the first resource is completed.

For example, additionally, the first device may receive the second SCI through the second PSCCH, based on the timer related to the active time being running and a third resource.

For example, the third resource may be selected based on a reselection related to the second resource.

For example, the third resource may be selected within an interval during which the timer related to the active time is running.

For example, the reselection may be performed based on pre-emption or resource re-evaluation.

For example, the reselection may be performed based on uplink, UL, -SL prioritization or prioritization between radio access technologies, RATs.

The embodiments described above may be applied to various devices described below. For example, a processor (102) of a first device (100) may obtain sidelink, SL, discontinuous reception, DRX, including information for a timer related to an active time. And, the processor (102) of the first device (100) may control a transceiver (106) to receive, from a second device (200), first sidelink control information, SCI, for scheduling of a physical sidelink shared channel, PSSCH, through a first physical sidelink control channel, PSCCH, based on the active time of the SL DRX configuration and a first resource. For example, the first SCI may include information related to a plurality of resources including the first resource and a second resource. And, the processor (102) of the first device (100) may control the transceiver (106) to receive, from the second device (200), a first medium access control, MAC, protocol data unit, PDU, through a first PSSCH, based on the active time and the first resource. And, the processor (102) of the first device (100) may monitor second SCI for scheduling of aPSSCH, transmitting through a second PSCCH, based on the second resource. And, the processor (102) of the first device (100) may start the timer related to the active time, based on the second SCI being not received on the second resource.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain sidelink, SL, discontinuous reception, DRX, including information for a timer related to an active time; receive, from a second device, first sidelink control information, SCI, for scheduling of a physical sidelink shared channel, PSSCH, through a first physical sidelink control channel, PSCCH, based on the active time of the SL DRX configuration and a first resource, wherein the first SCI may include information related to a plurality of resources including the first resource and a second resource; receive, from the second device, a first medium access control, MAC, protocol data unit, PDU, through a first PSSCH, based on the active time and the first resource; monitor second SCI for scheduling of a PSSCH, transmitting through a second PSCCH, based on the second resource; and start the timer related to the active time, based on the second SCI being not received on the second resource.

For example, the second SCI may be related to a retransmission of the first MAC PDU.

For example, the second SCI may be related to a reception of a second MAC PDU which is different from the first MAC PDU.

For example, the timer related to the active time may be started based on expiration of an SL DRX hybrid automatic repeat request, HARQ, round trip time, RTT, timer with a timer value of zero.

For example, the timer related to the active time may be an SL DRX retransmission timer.

For example, a maximum number of the plurality of resources may be three.

For example, additionally, the first device may operate as an inactive time of the SL DRX configuration from after a time point of the first resource to a time point of the second resource.

For example, the inactive time of the SL DRX configuration may be started from a time point where the reception of the first MAC PDU based on the first resource is completed.

For example, additionally, the first device may receive the second SCI through the second PSCCH, based on the timer related to the active time being running and a third resource.

For example, the third resource may be selected based on a reselection related to the second resource.

For example, the third resource may be selected within an interval during which the timer related to the active time is running.

For example, the reselection may be performed based on pre-emption or resource re-evaluation.

For example, the reselection may be performed based on uplink, UL, -SL prioritization or prioritization between radio access technologies, RATs.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: obtain sidelink, SL, discontinuous reception, DRX, including information for a timer related to an active time; receive, from a second UE, first sidelink control information, SCI, for scheduling of a physical sidelink shared channel, PSSCH, through a first physical sidelink control channel, PSCCH, based on the active time of the SL DRX configuration and a first resource, wherein the first SCI may include information related to a plurality of resources including the first resource and a second resource; receive, from the second UE, a first medium access control, MAC, protocol data unit, PDU, through a first PSSCH, based on the active time and the first resource; monitor second SCI for scheduling of a PSSCH, transmitting through a second PSCCH, based on the second resource; and start the timer related to the active time, based on the second SCI being not received on the second resource.

According to an embodiment of the present disclosure, a non-transitory computer-readable storage medium storing instructions may be proposed. For example, when executed, the instructions may cause a first device to: obtain sidelink, SL, discontinuous reception, DRX, including information for a timer related to an active time; receive, from a second device, first sidelink control information, SCI, for scheduling of a physical sidelink shared channel, PSSCH, through a first physical sidelink control channel, PSCCH, based on the active time of the SL DRX configuration and a first resource, wherein the first SCI may include information related to a plurality of resources including the first resource and a second resource; receive, from the second device, a first medium access control, MAC, protocol data unit, PDU, through a first PSSCH, based on the active time and the first resource; monitor second SCI for scheduling of a PSSCH, transmitting through a second PSCCH, based on the second resource; and start the timer related to the active time, based on the second SCI being not received on the second resource.

FIG. 14 shows a procedure for a second device to perform wireless communication, according to one embodiment of the present disclosure. The embodiment of FIG. 14 may be combined with various embodiments of the present disclosure.

Referring to FIG. 14, in step S1410, a second device may transmit, to a first device, first sidelink control information, SCI, for scheduling of a physical sidelink shared channel, PSSCH, through a first physical sidelink control channel, PSCCH, based on the active time of the SL DRX configuration and a first resource. For example, the first SCI may include information related to a plurality of resources including the first resource and a second resource. In step S 1420, the second device may transmit, to the first device, a first medium access control, MAC, protocol data unit, PDU, through a first PSSCH, based on the active time and the first resource. For example, the timer related to the active time may be started based on the second SCI being not transmitted on the second resource.

For example, additionally, the second device may trigger reselection related to the second resource; select a third resource within an interval during which the timer related to the active time is running, based on the reselection; and transmit, to the first device, the second SCI through the second PSCCH, based on the timer related to the active time being running and the third resource, wherein the timer related to the active time may be an SL DRX retransmission timer.

The embodiments described above may be applied to various devices described below. For example, a processor (202) of a second device (200) may control a transceiver (206) to transmit, to a first device (100), first sidelink control information, SCI, for scheduling of a physical sidelink shared channel, PSSCH, through a first physical sidelink control channel, PSCCH, based on the active time of the SL DRX configuration and a first resource. For example, the first SCI may include information related to a plurality of resources including the first resource and a second resource. And, the processor (202) of the second device (200) may control the transceiver (206) to transmit, to the first device (100), a first medium access control, MAC, protocol data unit, PDU, through a first PSSCH, based on the active time and the first resource. For example, the timer related to the active time may be started based on the second SCI being not transmitted on the second resource.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: transmit, to a first device, first sidelink control information, SCI, for scheduling of a physical sidelink shared channel, PSSCH, through a first physical sidelink control channel, PSCCH, based on the active time of the SL DRX configuration and a first resource, wherein the first SCI may include information related to a plurality of resources including the first resource and a second resource; and transmit, to the first device, a first medium access control, MAC, protocol data unit, PDU, through a first PSSCH, based on the active time and the first resource, wherein the timer related to the active time may be started based on the second SCI being not transmitted on the second resource.

For example, the one or more processors may execute the instructions to: trigger reselection related to the second resource; select a third resource within an interval during which the timer related to the active time is running, based on the reselection; and transmit, to the first device, the second SCI through the second PSCCH, based on the timer related to the active time being running and the third resource, wherein the timer related to the active time may be an SL DRX retransmission timer.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

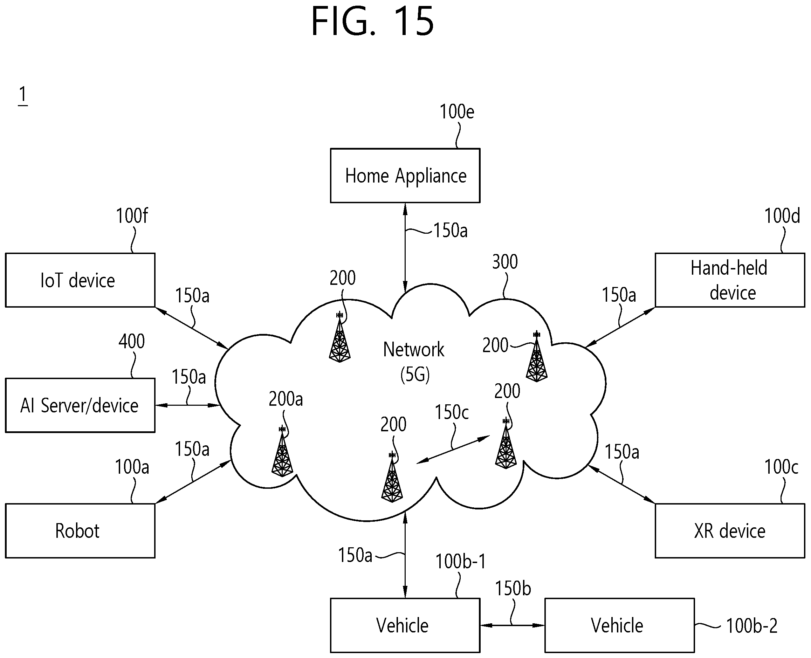

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

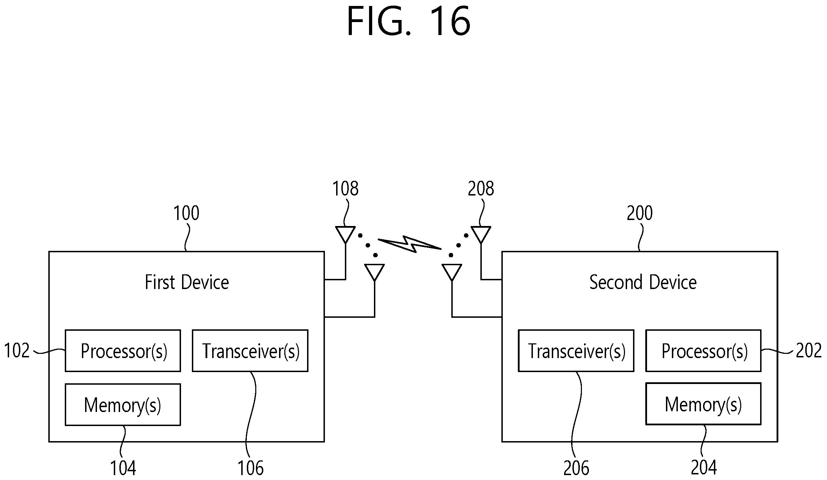

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

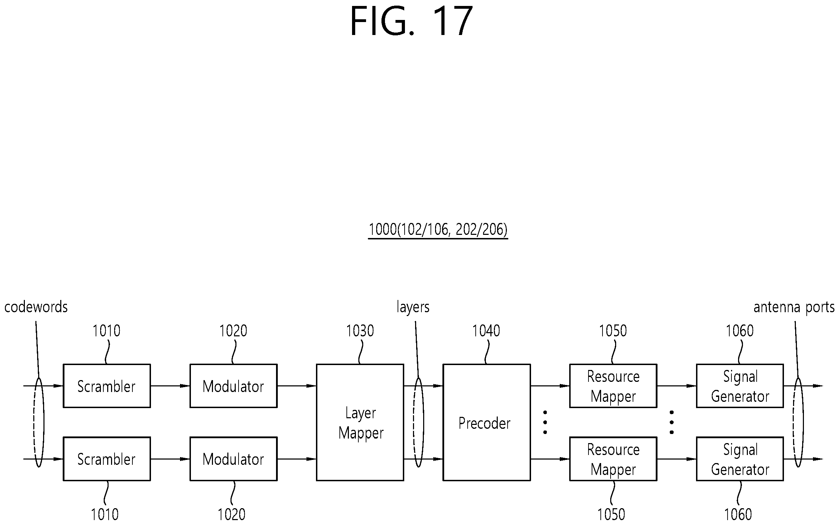

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

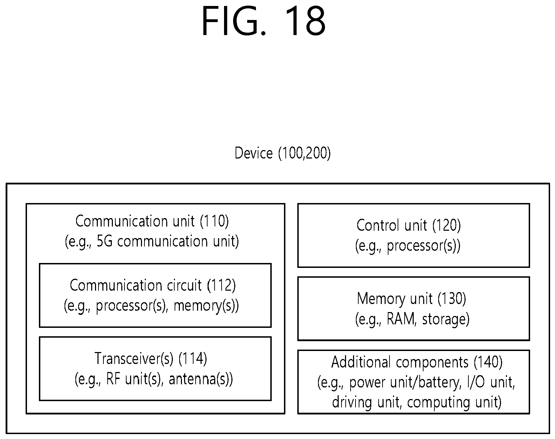

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

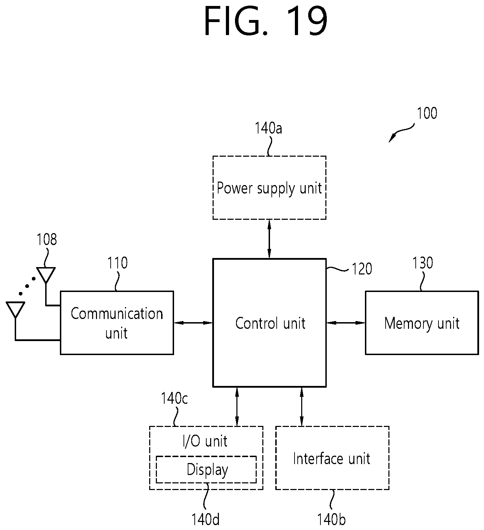

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

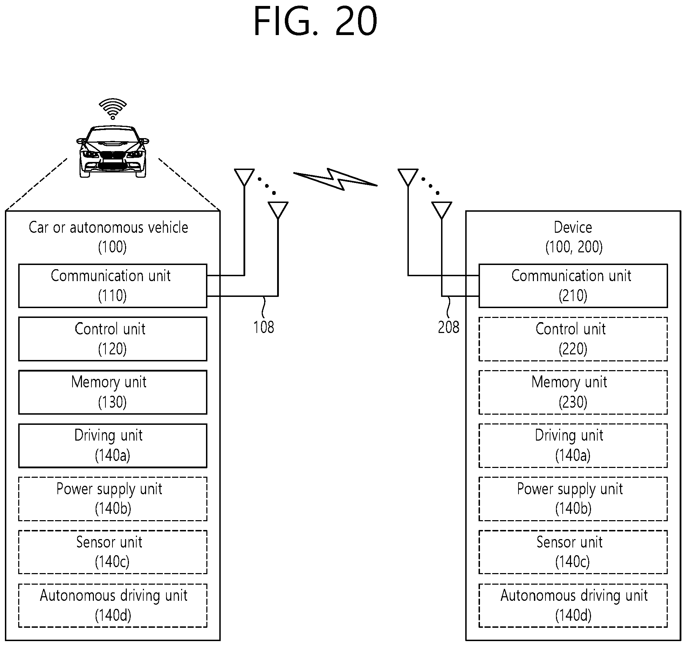

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

**1.** A method for performing, by a first device, wireless communication, the method comprising:

obtaining sidelink, SL, discontinuous reception, DRX, including information for a timer related to an active time;
receiving, from a second device, first sidelink control information, SCI, for scheduling of a physical sidelink shared channel, PSSCH, through a first physical sidelink control channel, PSCCH, based on the active time of the SL DRX configuration and a first resource,
wherein the first SCI includes information related to a plurality of resources including the first resource and a second resource;
receiving, from the second device, a first medium access control, MAC, protocol data unit, PDU, through a first PSSCH, based on the active time and the first resource;
monitoring second SCI for scheduling of a PSSCH, transmitting through a second PSCCH, based on the second resource; and

starting the timer related to the active time, based on the second SCI being not received on the second resource.

2. The method of claim 1, wherein the second SCI is related to a retransmission of the first MAC PDU.

3. The method of claim 1, wherein the second SCI is related to a reception of a second MAC PDU which is different from the first MAC PDU.

4. The method of claim 1, wherein the timer related to the active time is started based on expiration of an SL DRX hybrid automatic repeat request, HARQ, round trip time, RTT, timer with a timer value of zero.

5. The method of claim 4, wherein the timer related to the active time is an SL DRX retransmission timer.

6. The method of claim 1, wherein a maximum number of the plurality of resources is three.

7. The method of claim 1, further comprising:
operating as an inactive time of the SL DRX configuration from after a time point of the first resource to a time point of the second resource.

8. The method of claim 7, wherein the inactive time of the SL DRX configuration is started from a time point where the reception of the first MAC PDU based on the first resource is completed.

9. The method of claim 1, further comprising:
receiving the second SCI through the second PSCCH, based on the timer related to the active time being running and a third resource.

10. The method of claim 9, wherein the third resource is selected based on a reselection related to the second resource.

11. The method of claim 10, wherein the third resource is selected within an interval during which the timer related to the active time is running.

12. The method of claim 10, wherein the reselection is performed based on pre-emption or resource re-evaluation.

13. The method of claim 10, wherein the reselection is performed based on uplink, UL, -SL prioritization or prioritization between radio access technologies, RATs.

14. A first device for performing wireless communication, the first device comprising:

one or more memories storing instructions;
one or more transceivers; and
one or more processors connected to the one or more memories and the one or more transceivers, wherein the one or more processors execute the instructions to:

obtain sidelink, SL, discontinuous reception, DRX, including information for a timer related to an active time;
receive, from a second device, first sidelink control information, SCI, for scheduling of a physical sidelink shared channel, PSSCH, through a first physical sidelink control channel, PSCCH, based on the active time of the SL DRX configuration and a first resource,
wherein the first SCI includes information related to a plurality of resources including the first resource and a second resource;
receive, from the second device, a first medium access control, MAC, protocol data unit, PDU, through a first PSSCH, based on the active time and the first resource;
monitor second SCI for scheduling of a PSSCH, transmitting through a second PSCCH, based on the second resource; and
start the timer related to the active time, based on the second SCI being not received on the second resource.

15. A device adapted to control a first user equipment, UE, the device comprising:

one or more processors; and
one or more memories operably connectable to the one or more processors and storing instructions, wherein the one or more processors execute the instructions to:

obtain sidelink, SL, discontinuous reception, DRX, including information for a timer related to an active time;
receive, from a second UE, first sidelink control information, SCI, for scheduling of a physical sidelink shared channel, PSSCH, through a first physical sidelink control channel, PSCCH, based on the active time of the SL DRX configuration and a first resource,
wherein the first SCI includes information related to a plurality of resources including the first resource and a second resource;
receive, from the second UE, a first medium access control, MAC, protocol data unit, PDU, through a first PSSCH, based on the active time and the first resource;
monitor second SCI for scheduling of a PSSCH, transmitting through a second PSCCH, based on the second resource; and
start the timer related to the active time, based on the second SCI being not received on the second resource.

**16.** A non-transitory computer-readable storage medium storing instructions that, when executed, cause a first device to:

obtain sidelink, SL, discontinuous reception, DRX, including information for a timer related to an active time;
receive, from a second device, first sidelink control information, SCI, for scheduling of a physical sidelink shared channel, PSSCH, through a first physical sidelink control channel, PSCCH, based on the active time of the SL DRX configuration and a first resource,
wherein the first SCI includes information related to a plurality of resources including the first resource and a second resource;
receive, from the second device, a first medium access control, MAC, protocol data unit, PDU, through a first PSSCH, based on the active time and the first resource;
monitor second SCI for scheduling of a PSSCH, transmitting through a second PSCCH, based on the second resource; and
start the timer related to the active time, based on the second SCI being not received on the second resource.

**17.** A method for performing, by a second device, wireless communication, the method comprising:

transmitting, to a first device, first sidelink control information, SCI, for scheduling of a physical sidelink shared channel, PSSCH, through a first physical sidelink control channel, PSCCH, based on the active time of the SL DRX configuration and a first resource,
wherein the first SCI includes information related to a plurality of resources including the first resource and a second resource; and
transmitting, to the first device, a first medium access control, MAC, protocol data unit, PDU, through a first PSSCH, based on the active time and the first resource,
wherein the timer related to the active time is started based on the second SCI being not transmitted on the second resource.

**18.** The method of claim 17, further comprising:

triggering reselection related to the second resource;
selecting a third resource within an interval during which the timer related to the active time is running, based on the reselection; and
transmitting, to the first device, the second SCI through the second PSCCH, based on the timer related to the active time being running and the third resource,
wherein the timer related to the active time is an SL DRX retransmission timer.

**19.** A second device for performing wireless communication, the second device comprising:

one or more memories storing instructions;
one or more transceivers; and
one or more processors connected to the one or more memories and the one or more transceivers, wherein the one or more processors execute the instructions to:

transmit, to a first device, first sidelink control information, SCI, for scheduling of a physical sidelink shared channel, PSSCH, through a first physical sidelink control channel, PSCCH, based on the active time of the SL DRX configuration and a first resource,
wherein the first SCI includes information related to a plurality of resources including the first resource and a second resource; and
transmit, to the first device, a first medium access control, MAC, protocol data unit, PDU, through a first PSSCH, based on the active time and the first resource,
wherein the timer related to the active time is started based on the second SCI being not transmitted on the second resource.

20. The second device of claim 19, wherein the one or more processors execute the instructions to:

trigger reselection related to the second resource;
select a third resource within an interval during which the timer related to the active time is running, based on the reselection; and
transmit, to the first device, the second SCI through the second PSCCH, based on the timer related to the active time being running and the third resource,
wherein the timer related to the active time is an SL DRX retransmission timer.

# FIG. 1

# FIG. 2

EP 4 333 521 A1

**(a)**

| UE | gNB |
|----|-----|
| SDAP | SDAP |
| PDCP | PDCP |
| RLC | RLC |
| MAC | MAC |
| PHY | PHY |

**(b)**

| UE | gNB | AMF |
|----|-----|-----|
| NAS | | NAS |
| RRC | RRC | |
| PDCP | PDCP | |
| RLC | RLC | |
| MAC | MAC | |
| PHY | PHY | |

**(c)**

| UE A | UE B |
|------|------|
| SDAP | SDAP |
| PDCP | PDCP |
| RLC | RLC |
| MAC | MAC |
| PHY | PHY |

PC5-U

**(d)**

| UE A | UE B |
|------|------|
| RRC | RRC |
| PDCP | PDCP |
| RLC | RLC |
| MAC | MAC |
| PHY | PHY |

PC5-C

# FIG. 3

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

**15KHz**

| Slot 0 (14symbols) |
|---|

1ms

**30KHz**

| Slot 0 (14symbols) | Slot 1 |
|---|---|

500us

**60KHz**

| Slot 0 (14symbols) | Slot 1 | Slot 2 | Slot 3 |
|---|---|---|---|

250us

**120KHz**

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 4

Resource grid

A carrier
(up to 3300 subcarriers,
i.e., 275 RBs)

A BWP

1RB=12 subcarriers

1 RE

1subcarrier

1 symbol

l=0 · · ·

k=0

EP 4 333 521 A1

# FIG. 5

PRB N3

$N^{size}_{BWP, 2}$

PRB 1

PRB 0

PRB N2

$N^{size}_{BWP, 1}$

PRB 1

PRB 0

PRB N1

$N^{size}_{BWP, 0}$

PRB 1

PRB 0

$N^{start}_{BWP, 2}$

$N^{start}_{BWP, 1}$

$N^{start}_{BWP, 0}$

Carrier
Bandwidth

CRB 0

Freq.

Time

PRB 0 (Point A) in reference resource block

# FIG. 6

(a)

(b)

# FIG. 7

(a)

(b)

(c)

● : TX UE

⊘ : RX UE

# FIG. 8

Reserved resources in SCI

| 1st resource (PSCCH/PSSCH transmission) | 2nd resource (PSCCH/PSSCH transmission) | 3rd resource (PSCCH/PSSCH transmission) |

TX UE side

1st Transmission     2nd Transmission     3rd Transmission

RX UE side

Active State

EP 4 333 521 A1

# FIG. 9

Reserved resources in SCI

| 1st resource (PSCCH/PSSCH transmission) | 2nd resource (PSCCH/PSSCH transmission) | 3rd resource (PSCCH/PSSCH transmission) |

TX UE side

Resource reselection
by pre-emption or etc. must be performed
within this duration

1st Transmission     2nd Transmission     3rd Transmission

RX UE side

Active    Sleep    Retransmission Timer    Sleep

The time point when a reception of
1st transmission is completed

SCI reception failure

EP 4 333 521 A1

# FIG. 10

31 slot

Tx UE's SCI transmission perspective (solid line)

| 1st | 2nd | 3rd |

Rx UE's SCI reception perspective (dotted line)

31 slot
Start RTT timer | Start Retransmission timer

# FIG. 11

31 slot

Tx UE's SCI transmission perspective (solid line)

| 1st | 2nd | | 3rd |

Retransmission 2nd

Rx UE's SCI reception perspective (dotted line)

31 slot
Start RTT timer | Start Retransmission timer

# FIG. 12

31 slot

Drop SL packet transmission due to UL-SL prioritization or etc.

1st

2nd ✗

reselected resource

Start Retransmission timer

SCI reception failure

# FIG. 13

| obtaining SL DRX including information for a timer related to an active time | ~S1310 |

↓

| receiving, from a second device, first SCI for scheduling of a PSSCH through a first PSCCH, based on an active time of an SL DRX configuration and a first resource | ~S1320 |

↓

| receiving, from the second device, a first MAC PDU through a first PSSCH, based on an active time and a first resource | ~S1330 |

↓

| monitoring second SCI for scheduling of a PSSCH, transmitting through a second PSCCH, based on a second resource | ~S1340 |

↓

| starting a timer related to an active time, based on second SCI being not received on a second resource | ~S1350 |

# FIG. 14

| transmitting, to a first device, first SCI for scheduling of a PSSCH through a first PSCCH, based on an active time of an SL DRX configuration and a first resource | ~S1410 |

↓

| transmitting, to a first device, a first MAC PDU through a first PSSCH, based on an active time and a first resource | ~S1420 |

# FIG. 15

# FIG. 16

EP 4 333 521 A1

FIG. 17

# FIG. 18

Device (100,200)

| | |
|---|---|
| **Communication unit (110)**<br>(e.g., 5G communication unit)<br><br>Communication circuit (112)<br>(e.g., processor(s), memory(s))<br><br>Transceiver(s) (114)<br>(e.g., RF unit(s), antenna(s)) | **Control unit (120)**<br>(e.g., processor(s))<br><br>**Memory unit (130)**<br>(e.g., RAM, storage)<br><br>**Additional components (140)**<br>(e.g., power unit/battery, I/O unit,<br>driving unit, computing unit) |

# FIG. 19

# FIG. 20

| Car or autonomous vehicle (100) | Device (100, 200) |
|---|---|
| Communication unit (110) | Communication unit (210) |
| Control unit (120) | Control unit (220) |
| Memory unit (130) | Memory unit (230) |
| Driving unit (140a) | Driving unit (140a) |
| Power supply unit (140b) | Power supply unit (140b) |
| Sensor unit (140c) | Sensor unit (140c) |
| Autonomous driving unit (140d) | Autonomous driving unit (140d) |

108    208

EP 4 333 521 A1

# EP 4 333 521 A1

## INTERNATIONAL SEARCH REPORT

| | International application No. |
|---|---|
| | **PCT/KR2022/005863** |

### A. CLASSIFICATION OF SUBJECT MATTER

**H04W 72/02**(2009.01)i; **H04W 72/04**(2009.01)i; **H04W 28/04**(2009.01)i; **H04W 72/12**(2009.01)i; **H04W 76/28**(2018.01)i; **H04W 4/40**(2018.01)i; **H04W 92/18**(2009.01)i

According to International Patent Classification (IPC) or to both national classification and IPC

### B. FIELDS SEARCHED

Minimum documentation searched (classification system followed by classification symbols)

H04W 72/02(2009.01); H04B 7/0413(2017.01); H04W 52/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SL DRX configuration, active time, timer, PSCCH, PSSCH, 1st SCI, 2nd SCI, MAC PDU, retransmission, SL DRX HARQ RTT timer, SL DRX retransmission timer, 비활성 시간(inactive time), 프리앰션 (preemption), 재평가(re-evaluation), prioritization

### C. DOCUMENTS CONSIDERED TO BE RELEVANT

| Category* | Citation of document, with indication, where appropriate, of the relevant passages | Relevant to claim No. |
|---|---|---|
| Y | LG ELECTRONICS. Discussion on feasibility and benefits for mode 2 enhancement. R1-2007896, 3GPP TSG RAN WG1 Meeting #103-e, e-Meeting. 01 November 2020.<br>See section 2.1. | 1-20 |
| Y | INTERDIGITAL. Summary of [POST113-e][703][V2X/SL] Details of Timer. R2-2102801, 3GPP TSG-RAN WG2 Meeting #113-bis-e, Electronic Meeting. 09 April 2021.<br>See sections 2.1.2-4. | 1-20 |
| Y | OPPO. The effect of DRX on resource selection. R1-2008241, 3GPP TSG RAN WG1 #103-e, e-Meeting. 01 November 2020.<br>See section 2.1. | 7-8 |
| A | WO 2021-071332 A1 (LG ELECTRONICS INC.) 15 April 2021 (2021-04-15)<br>See paragraphs [0171]-[0228]. | 1-20 |
| A | US 2020-0229171 A1 (INTEL CORPORATION) 16 July 2020 (2020-07-16)<br>See paragraph [0213]; and claims 1, 4 and 10. | 1-20 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 July 2022** | **28 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

45

**INTERNATIONAL SEARCH REPORT**
Information on patent family members

International application No.

**PCT/KR2022/005863**

| Patent document cited in search report | | | Publication date (day/month/year) | Patent family member(s) | Publication date (day/month/year) |
|---|---|---|---|---|---|
| WO | 2021-071332 | A1 | 15 April 2021 | None | |
| US | 2020-0229171 | A1 | 16 July 2020 | None | |

Form PCT/ISA/210 (patent family annex) (July 2019)